# DEMANDE DE BREVET EUROPEEN

(11) **EP 4 699 858 A1**
(43) Date de publication de la demande: **25.02.2026**
(21) Numéro de dépôt: 25196765.9
(22) Date de dépôt: 19.08.2025
(51) Int. Cl.: B60N 2/06, B60N 2/14, B60N 2/30

(54) **SIÈGE DE VÉHICULE AUTOMOBILE EN DEUX PARTIES**

(30) Priorité: 20.08.2024 FR 2409007
(71) Demandeur: Flexis, 92100 Boulogne Billancourt (FR)
(72) Inventeur: CHEREAU, Pierre, 78280 GUYANCOURT (FR); DUCHENE, Vincent, 78280 GUYANCOURT (FR); LAPORTE-GALAA, Philippe, 78288 GUYANCOURT CEDEX (FR)
(74) Mandataire: Lavoix

(57) **Abrégé**

L'invention concerne un siège (100) de véhicule automobile (1) comportant :
- un fauteuil (120) qui comprend une assise (122) et un dossier (121), et
- un support (110) qui est adapté à être monté sur un plancher (12) du véhicule automobile (1) et sur lequel est monté le fauteuil.

Selon l'invention, le support comporte des moyens d'ancrage, et le fauteuil comporte des premiers moyens de verrouillage adaptés à se verrouiller sur lesdits moyens d'ancrage pour bloquer le fauteuil sur le support, et des premiers moyens de manœuvre manœuvrables manuellement et adaptés à désactiver les premiers moyens de verrouillage pour libérer le fauteuil du support.

## Description

### DOMAINE TECHNIQUE DE L'INVENTION

La présente invention concerne de manière générale les aménagements intérieurs des véhicules automobiles.

Elle concerne plus particulièrement un siège de véhicule automobile comportant un fauteuil qui comprend une assise et un dossier, et un support qui est adapté à être monté sur un plancher du véhicule automobile et sur lequel est monté le fauteuil.

Elle concerne également un véhicule automobile équipé d'un tel siège.

### ETAT DE LA TECHNIQUE

Il est connu d'intégrer des rails dans les planchers de véhicules automobiles, notamment des véhicules de type monospace.

Ces rails permettent de monter des sièges dans le véhicule de telle manière que ces sièges peuvent coulisser d'avant en arrière le long du plancher, offrant ainsi diverses positions. Les rails sont alors équipés de mécanismes de verrouillage pour assurer le blocage des sièges en position fixe durant le transport.

Comme l'explique le document FR2728860, les sièges eux-mêmes peuvent être modulaires, pour permettre de les placer dans différentes positions (face à la route ou dos à la route), voire de les retirer afin de libérer le plancher pour le chargement d'objets encombrants dans le véhicule.

Cependant, ces fonctions augmentent la complexité des sièges, ainsi que leurs poids.

Alors, le poids élevé des sièges, qui peut atteindre 30 kilogrammes, rend leur manipulation difficile, particulièrement lorsqu'il s'agit de reconfigurer l'espace intérieur du véhicule en extrayant les sièges hors des rails pour les retourner ou pour les retirer du véhicule.

### PRÉSENTATION DE L'INVENTION

Afin de remédier à l'inconvénient précité de l'état de la technique, la présente invention propose de scinder le siège en deux parties.

Plus particulièrement, on propose selon l'invention un siège tel que défini dans l'introduction (avec un support et un fauteuil), dans lequel :
- l'un parmi le support et le fauteuil comporte des moyens d'ancrage, et
- l'autre parmi le support et le fauteuil comporte des premiers moyens de verrouillage adaptés à se verrouiller sur lesdits moyens d'ancrage pour bloquer le fauteuil sur le support, et des premiers moyens de manœuvre (de préférence manœuvrables manuellement) et adaptés à désactiver les premiers moyens de verrouillage pour libérer le fauteuil du support.

Le siège comprend une structure porteuse sur laquelle sont montés l'assise et le dossier et qui comporte soit les premiers moyens de verrouillage et les premiers moyens de manœuvre, soit les moyens d'ancrage.

Ainsi, grâce à l'invention, le fauteuil et le support peuvent être manipulés indépendamment l'un de l'autre.

Le support comporte en effet la partie qui permet de monter le siège sur le plancher et qui s'avère relativement lourde (en général entre 10 et 15 kg), tandis que le fauteuil comporte uniquement la structure qui permet de recevoir le passager (et qui pèse entre 15 et 20 kg).

Les deux parties pesant ainsi moins de 20 kg chacune, elles s'avèrent plus faciles à manipuler.

Un autre avantage procuré par l'invention est que le support permet non seulement de recevoir le fauteuil, mais il peut également recevoir d'autres éléments en lieu et place du fauteuil, par exemple un système de fixation d'un vélo ou d'une planche, ou plus généralement tout autre équipement.

D'autres caractéristiques avantageuses et non limitatives du siège conforme à l'invention, prises individuellement ou selon toutes les combinaisons techniquement possibles, sont les suivantes :
- le support comporte les moyens d'ancrage, et le fauteuil comporte les premiers moyens de verrouillage et les premiers moyens de manœuvre ;
- le support comporte des seconds moyens de verrouillage adaptés à verrouiller le support sur le plancher, et des seconds moyens de manœuvre manœuvrables manuellement et adaptés à désactiver les seconds moyens de verrouillage pour libérer au moins une mobilité du support par rapport au plancher ;
- le plancher intégrant des rails parallèles, les seconds moyens de manœuvre sont adaptés à libérer une mobilité de coulissement du support dans lesdits rails ;
- les moyens d'ancrage comportent, en au moins trois points d'ancrage, une tringle sur laquelle les premiers moyens de verrouillage peuvent être verrouillés ;
- les premiers moyens de verrouillage comportent, d'une part, une embase fixe qui définit une encoche, et, d'autre part, un pêne qui est monté mobile par rapport à l'embase fixe entre une position activée dans laquelle il est adapté à bloquer une tringle au fond de l'encoche et une position désactivée dans laquelle il libère la tringle ;
- il est prévu quatre tringles, et les premiers moyens de verrouillage comportent deux gâches et deux serrures adaptés à être verrouillés respectivement sur les quatre tringles ;
- le fauteuil est adapté à être monté sur le support avec deux orientations distinctes ;
- le support comporte des moyens de fixation adaptés à bloquer un équipement distinct du véhicule automobile, de préférence un équipement de loisir et/ou sportif tel qu'un vélo ou une planche de surf.

L'invention propose également un véhicule automobile comportant un châssis qui comprend un plancher, et au moins un siège tel que précité monté sur le plancher.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### DESCRIPTION DÉTAILLÉE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] est une vue schématique en perspective de l'intérieur d'un habitacle d'un véhicule automobile, comprenant un siège conforme à l'invention, illustré en position d'utilisation ;
[Fig. 2] est une vue similaire à celle de la figure 1, sur laquelle le fauteuil du siège est partiellement retiré de son support ;
[Fig. 3] est une vue schématique en perspective du support du siège de la figure 1 ;
[Fig. 4] illustre une vue schématique en perspective d'une partie inférieure du fauteuil du siège de la figure 1 et deux vues de détail de ce fauteuil ;
[Fig. 5] est une vue similaire à celle de la figure 1, sur laquelle le fauteuil du siège est retourné ;
[Fig. 6] est une vue similaire à celle de la figure 1, sur laquelle le fauteuil du siège a été extrait et est remplacé par un vélo.

Un véhicule automobile 1 (voiture, car, camion, bateau, avion...) comporte généralement un châssis 10 comprenant un plancher 12 et des éléments de carrosserie 11 qui délimitent ensemble un habitacle.

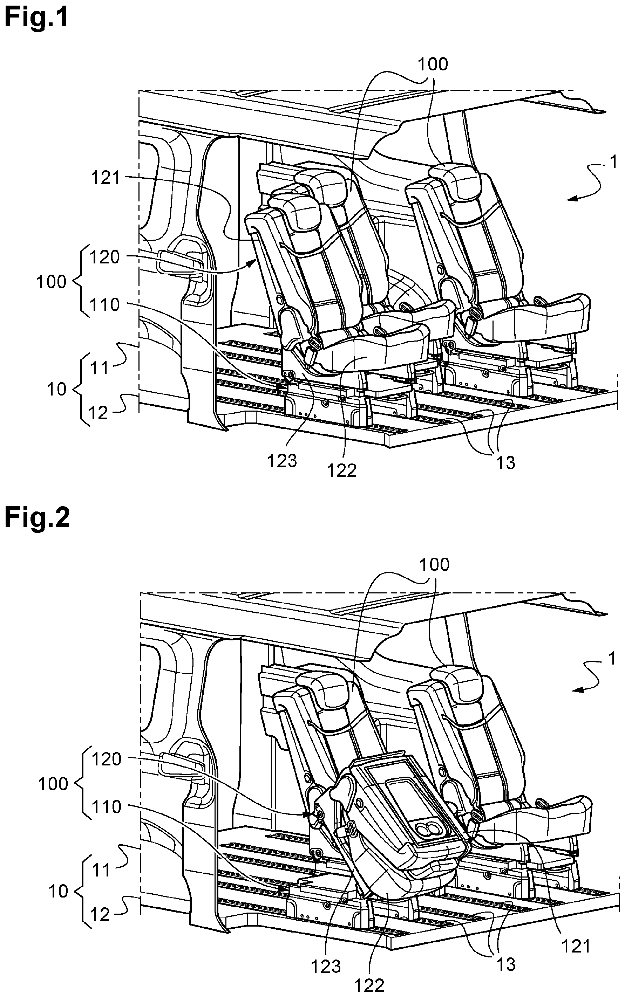

Sur la figure 1, on a représenté un tel véhicule automobile 1. Il s'agit ici d'une voiture, et plus précisément d'une voiture de type monospace (c'est-à-dire d'une voiture caractérisée par une carrosserie monocoque qui intègre un habitacle, un compartiment moteur et un espace de chargement sans démarcation visible, créant ainsi une silhouette uniforme et fluide). Ce véhicule comporte au moins un siège 100 prévu pour être installé dans l'habitacle et pour être fixé sur le plancher 12 de ce véhicule automobile.

En pratique, un tel véhicule automobile comporte plusieurs rangées de siège, dont au moins une rangée avant d'au moins deux sièges, et une rangée arrière d'au moins deux sièges. Ici, la rangée arrière comporte trois sièges identiques, dont un seul d'entre eux sera décrit. Bien entendu, le véhicule pourra par ailleurs accueillir d'autres rangées de siège. Il pourrait par exemple comporter trois rangées de deux ou trois sièges.

Dans la suite de la description, les termes « avant » et « arrière » seront utilisés par rapport au véhicule automobile 1, la partie avant d'un élément désignant la partie de cet élément qui est située du côté du capot du véhicule et la partie arrière désignant la partie de cet élément qui est située du côté opposé.

Les termes « inférieur » (ou « bas ») et « supérieur » (ou « haut ») seront utilisés de la même façon, la partie inférieure d'un élément désignant la partie de cet élément qui est située du côté du plancher 12 du véhicule et la partie supérieure désignant la partie de cet élément qui est située du côté du toit du véhicule.

L'adjectif « longitudinal » s'appliquera à une direction ou un axe orienté de l'avant vers l'arrière du véhicule, parallèlement à la direction d'avance du véhicule lorsque le volant est en position neutre.

L'adjectif « transversal » s'appliquera à une direction ou un axe orienté orthogonalement aux axes longitudinaux et horizontalement lorsque le véhicule roule sur une route horizontale.

Le terme « fixé » (ou « bloqué ») sera employé pour désigner un assemblage sans aucune mobilité entre deux éléments.

Au contraire, le terme « monté » sera employé pour désigner un assemblage avec ou sans mobilité entre deux éléments.

Comme le montre la figure 1, le siège 100 comporte classiquement un fauteuil 120 qui comprend une assise 122 et un dossier 121 équipé d'un appui-tête. Ces assise et dossier comprennent chacun une armature et une garniture rapportée sur l'armature.

Le dossier pourrait être monté sur l'assise, de façon fixe ou avec une mobilité de basculement pour permettre de régler son inclinaison.

Ici, le dossier 121 et l'assise 122 sont montés sur une structure porteuse 123 commune. Cette structure porteuse 123 comporte deux flancs qui s'étendent longitudinalement et en hauteur, parallèlement l'un à l'autre. Le dossier 121 est monté sur ces deux flancs de telle sorte qu'il peut être entièrement replié contre l'assise 121, ce qui facilitera la manipulation du fauteuil 120.

Bien entendu, en variante, le fauteuil pourrait présenter des formes différentes. Il pourrait notamment délimiter non pas une seule place, comme cela est représenté, mais plusieurs places pour former une banquette. Cette variante n'est toutefois pas privilégiée eu égard au poids que présenterait une telle banquette.

Selon l'invention, le siège 100 comporte, outre ce fauteuil 120, un support 110 qui est adapté à être monté sur le plancher 12 du véhicule et sur lequel est monté le fauteuil 120. En d'autres termes, le siège 100 est formé de deux parties amovibles l'une par rapport à l'autre.

Ce support 110 comporte pour cela des moyens d'ancrage 114 du fauteuil 120 et des moyens de montage sur le plancher 12.

Quant au fauteuil 120, il comporte en correspondance des premiers moyens de verrouillage 129 adaptés à se verrouiller sur ces moyens d'ancrage 114, ainsi que des premiers moyens de manoeuvre 134, 144 manuels (actionnable sans outil) adaptés à désactiver les premiers moyens de verrouillage 129 pour libérer le fauteuil 120 du support 110. Ainsi le fauteuil 120 peut-il être facilement dissocié de son support 110.

Ces moyens d'ancrage 114, de verrouillage 129 et de manoeuvre 134, 144 pourraient se présenter sous des formes très diverses.

De manière préférentielle, leurs formes seront telles qu'il sera possible de monter le fauteuil 120 sur le support 110 en position normale (face à la route) ou en position inversée (dos à la route).

On peut ici présenter le mode de réalisation particulier du siège 100 illustré sur les figures, en commençant par décrire le support 110.

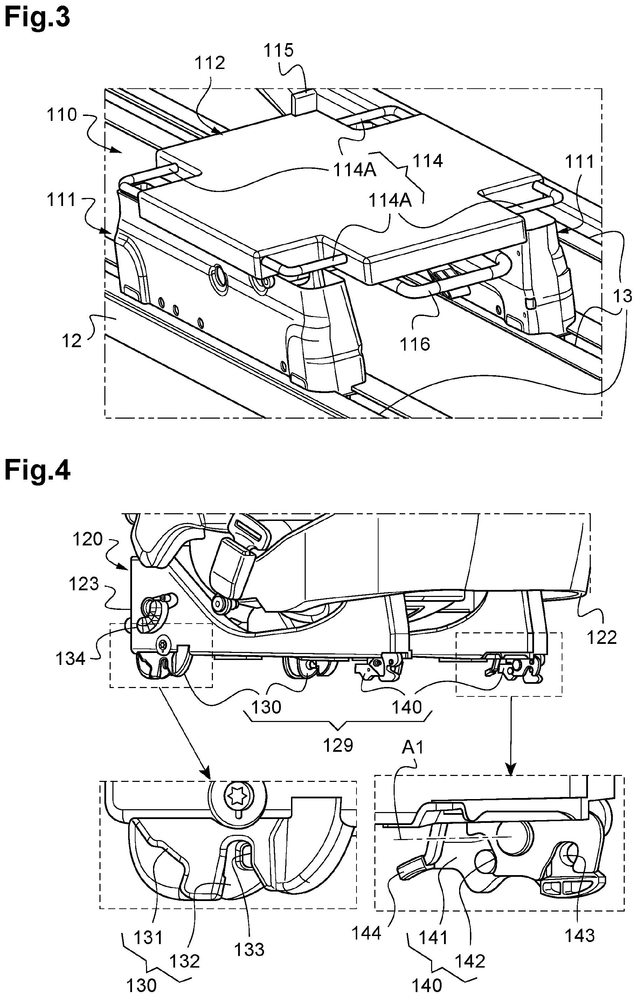

Comme le montre la figure 3, ce support 110 est prévu pour être monté sur le plancher 12 du véhicule automobile 1.

On pourrait prévoir qu'il y soit fixé. Dans cette éventualité, il y serait préférentiellement fixé de façon amovible, par exemple au moyen de boulons.

Mais de manière préférentielle, le support 110 est monté sur le plancher 12 de façon à être mobile longitudinalement et amovible.

Pour cela, le plancher 12 intègre des rails 13 parallèles. Ici, ces rails sont formés par des profilés de section rectangulaire, ouverts sur le dessus, et de préférence métallique. Il est de préférence prévu deux rails 13 parallèles pour chaque siège de la rangée arrière. Dans l'exemple illustré, il est donc prévu trois couples de rails. Une moquette est installée entre les rails pour l'agrément. Chaque rail comporte intérieurement des crans.

Le support 110 illustré sur la figure 3 comporte alors une plateforme 112 se présentant ici sous la forme d'une plaque plane, et deux pieds 111 fixés sous la plateforme, parallèlement l'un à l'autre. Ces deux pieds sont fixés l'un à l'autre au moins par cette plateforme 112. Toutefois, pour leur conférer une meilleure rigidité, on pourra employer une ou deux traverses en supplément pour relier le deux pieds 111 ensemble.

Ces deux pieds 111 comportent chacun en partie basse une nervure adaptée à coulisser à l'intérieur de l'un des rails 13, des seconds moyens de verrouillage adaptés à verrouiller le support 110 dans les rails 13 en position fixe, et des seconds moyens de manœuvre manuels (actionnables sans outil) adaptés à désactiver les seconds moyens de verrouillage pour libérer la mobilité de coulissement du support 110 le long des rails 13. Ces seconds moyens de manœuvre sont préférentiellement prévus en outre pour permettre d'extraire les pieds 111 des rails 13.

Dans l'exemple représenté sur les figures, les deux pieds 111 présentent chacun un forme parallélépipédique allongée longitudinalement et en hauteur, dont la face inférieure porte la nervure adaptée à coulisser dans l'un des rails 13.

Les seconds moyens de verrouillage (non visibles sur les figures) peuvent alors comporter des crans (non représentés) montés mobile sur le pied 111 et adaptés à venir s'accrocher aux crans prévus en correspondance dans le rail 13.

Les seconds moyens de manœuvre comprennent quant à eux ici un levier 116 accessible à l'occupant du siège et permettant, lorsque l'occupant du siège souhaite avancer ou reculer, d'éloigner les crans des pieds 111 de ceux du rail 13 pour libérer la mobilité de coulissement du support 110. Au repos (à l'état activé), les crans coopèrent entre eux et sont maintenus dans cette position, par exemple par des moyens de rappel élastique. Ces crans s'éloignent alors les uns des autres uniquement lorsque le levier est manœuvré par l'occupant (à l'état désactivé).

Ici, comme le montre la figure 3, ce levier 116 forme une tige dont une partie centrale est repliée en U pour être accessible par l'avant du siège 100, et dont les deux extrémités coaxiales sont logées dans les deux pieds 111, de façon à former un palonnier.

Ce levier 116 pourrait être utilisé pour extraire le support 110 des rails 13. On pourrait pour cela prévoir que les extrémités arrière des rails soient toutes ouvertes de façon à ce que, en faisant glisser le support 110 vers l'arrière, il soit possible de l'extraire de ces rails 13.

Toutefois, de façon préférentielle, il est prévu un mécanisme permettant d'extraire le support 110 des rails 13 quelle que soit la position du support le long de ces rails. Ici, ce mécanisme est commandé par une sangle 115 qu'il est possible de tirer de façon à escamoter les crans des pieds 111 pour les extraire des rails 13.

Ce mécanisme est décrit plus en détail dans le document FR2950300.

Les deux pieds 111 sont par exemple formés en matière métallique, et sont ici issus d'une opération d'emboutissage d'une tôle d'acier.

La plateforme 112, qui relie entre eux les deux pieds 111, est également formé en matière métallique.

Elle présente, dans l'exemple illustré sur la figure 3, une forme de croix suisse, avec quatre échancrures à ses quatre coins.

Elle s'étend de préférence horizontalement et/ou parallèlement au plancher 12.

Les moyens d'ancrage 114 portés par cette plateforme 112 pour que le fauteuil 120 puisse s'y fixer comporte de préférence au moins trois points d'ancrage. Ils en comportent ici de manière encore plus préférentielle quatre.

Ici, chaque point d'ancrage est formé par un tronçon 114A de tringle sur lequel les premiers moyens de verrouillage 129 du fauteuil peuvent s'accrocher et se verrouiller.

Chaque tronçon 114A de tringle présente de préférence une forme en L, pour s'étendre d'un côté à l'autre de l'échancrure dans laquelle il se trouve.

En pratique, on peut prévoir que les quatre tronçons 114A de tringle soient formés d'une seule pièce (appelée « tringle ») repliée selon un contour rectangulaire, et que la plateforme 112 soit clipsée par-dessus cette unique tringle. En variante, les quatre tronçons 114A de tringle pourraient former des pièces distinctes et être soudés sur les bords des échancrures de la plateforme.

Ici, cette unique tringle est formée par une tige rigide, de préférence en métal (ici en acier). Cette tige présente par exemple une section circulaire.

La forme de la tringle est telle que la plateforme 112 présente au moins un plan de symétrie vertical. Elle présente ici deux plans de symétrie verticaux et perpendiculaires l'un à l'autre. De cette manière, les premiers moyens de verrouillage 129 du fauteuil 120 peuvent se fixer à la tringle dans quatre positions : face à la route, dos à la route, tourné vers la gauche ou tourné vers la droite.

On peut alors décrire plus en détail les premiers moyens de verrouillage 129 qui permettent de fixer le fauteuil 120 à cette tringle.

Ils sont ici situés en saillie des faces inférieures des flancs de la structure porteuse 123 du fauteuil 120.

Ils pourraient comporter quatre systèmes identiques. Mais ici, et de façon préférentielle, ils comportent deux gâches 140 avant et deux serrures 130 arrières adaptés à se verrouiller respectivement sur les quatre tronçons 114A de tringle.

Ces gâches et serrures présentent des formes différentes.

Comme le montre la figure 4, les serrures 130 comportent chacune une embase fixe 131 en forme de pince, qui définit une encoche 133 pour la tringle.

Cette encoche 133 est ouverte vers le bas. Ainsi, le verrouillage du fauteuil 120 sur le support 110 se fait en rapportant verticalement les serrures 130 sur les tronçons 114A de tringle correspondants.

Chaque serrure 130 comporte en outre un pêne 132 monté pivotant sur l'embase fixe 131 autour d'un axe transversal, entre une position activée dans laquelle il bloque la tringle au fond de l'encoche et une position désactivée dans laquelle il libère la tringle, ici en se rentrant à l'intérieur de l'embase fixe.

Un moyen de rappel élastique permet de retenir le pêne 132 en position activée. Le moyen de manœuvre 134 accessible à l'usager pour ramener le pêne 132 en position désactivée se présente ici sous la forme d'un levier, de préférence accessible par l'arrière du siège ou le côté du siège.

On notera que le mécanisme du pêne 132 est tel qu'il n'est pas besoin d'utiliser ce levier pour verrouiller la serrure 130 sur le tronçon 114A de tringle correspondant.

Chaque gâche 140 présente une forme similaire, avec une embase fixe 141 qui délimite une encoche 143 et un pêne 142 qui pivote par rapport à l'embase fixe 141. Toutefois, l'encoche 143 s'ouvre vers l'avant. Ainsi, le verrouillage du fauteuil 120 sur le support 110 se fait en basculant le fauteuil vers l'avant puis en le rapportant horizontalement. En outre, le moyen de manœuvre 144 du pêne 142 se présente ici sous la forme d'un levier 144 qui est accessible par le dessous du fauteuil 120. Ce levier 144 est conçu de telle manière que lorsque la gâche est rapportée sur le tronçon 114A de tringle correspondant, le levier vient en appui contre la plate-forme 112 ce qui permet à la gâche de se verrouiller sur la tringle.

Ainsi, comme le montre la figure 2, pour retirer le fauteuil 120 de son support 110, il convient de replier le dossier 121 sur l'assise 122, de manœuvrer les pênes 132 des serrures 130 arrière afin de faire basculer le fauteuil 120 vers l'avant, et éventuellement de manœuvrer les pênes 142 des gâches 140 pour retirer complétement le fauteuil 120 de son support 110 (cette dernière manœuvre pouvant s'effectuer automatiquement, pour plus de facilité, si le pêne 142 est rappelé élastiquement en position désactivée).

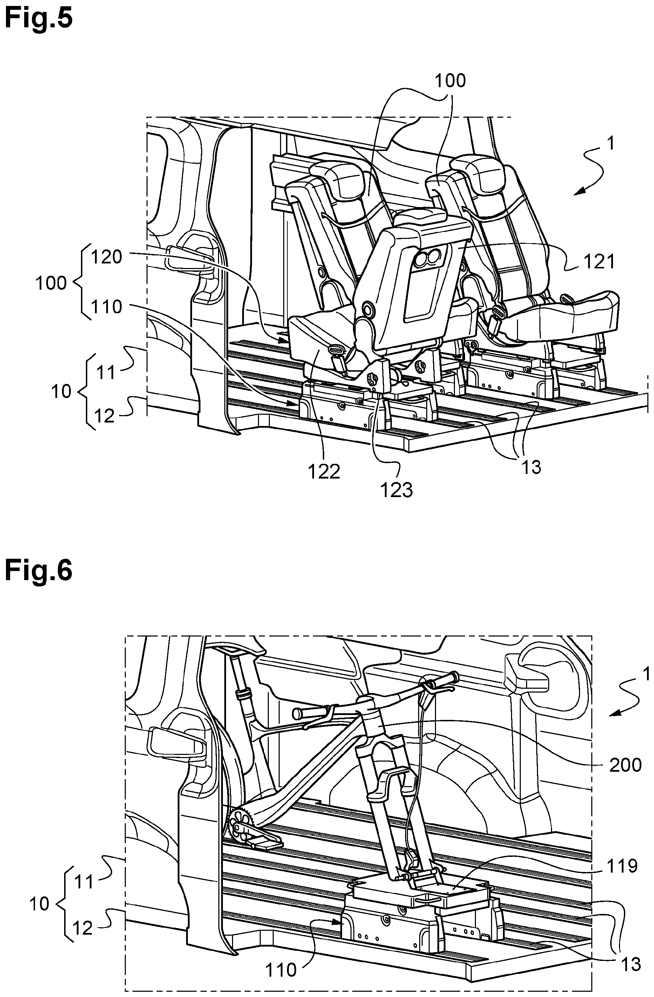

Comme le montre la figure 5, il est alors possible de retourner le fauteuil 120 pour le fixer tête-bêche sur son support 110.

Il est également possible de le poser à distance de son support, sur le plancher, ou de l'extraire du véhicule.

Le support 110 peut alors aussi être extrait des rails 13 ou rester en place.

Dans cette dernière éventualité, il peut être utilisé pour supporter un équipement distinct des composants du véhicule automobile 1. Il peut ainsi être utilisé pour bloquer dans l'habitacle un quelconque objet (par exemple en utilisant des sangles).

De façon préférentielle, le support pourra être équipé de moyens de fixation 119 adaptés à bloquer un équipement de loisir et/ou sportif tel que par exemple un vélo 200 (figure 6) ou une planche de surf. Le moyen de fixation 119 pourra être installé au besoin sur le support 110, ou pourra être prévu de façon native sur celui-ci.

Dans l'exemple représenté sur la figure 6, le moyen de fixation est vissé sur la plateforme 112. En variante, il pourrait être prévu pour être clipsé sur la tringle du support 110.

On notera en outre que le fauteuil représenté sur les figures pourra être extrait de son support 110 et remplacé par un siège bébé ou enfant, pour autant que ce dernier comporte des moyens de fixation à la tringle du support.

La présente invention n'est nullement limitée au mode de réalisation décrit et représenté, mais l'homme du métier saura y apporter toute variante conforme à l'invention.

Typiquement, le support 110 pourrait comporter les premiers moyens de verrouillage 129 et les premiers moyens de manœuvre 134, 144, auquel cas ce serait le fauteuil 120 qui comporterait les moyens d'ancrage 114.

## Revendications

1. Siège (100) de véhicule automobile (1) comportant :
- un fauteuil (120) qui comprend une assise (122) et un dossier (121), et
- un support (110) qui est adapté à être monté sur un plancher (12) du véhicule automobile (1) et sur lequel est monté le fauteuil (120),
l'un parmi le support (110) et le fauteuil (120) comporte des moyens d'ancrage (114), et
l'autre parmi le support (110) et le fauteuil (120) comporte :
- des premiers moyens de verrouillage (129) adaptés à se verrouiller sur lesdits moyens d'ancrage (114) pour bloquer le fauteuil (120) sur le support (110), et
- des premiers moyens de manœuvre (134, 144) adaptés à désactiver les premiers moyens de verrouillage (129) pour libérer le fauteuil (120) du support (110),
le siège (100) étant **caractérisé en ce que** le fauteuil (120) comprend une structure porteuse (123) sur laquelle sont montés l'assise (122) et le dossier (121), la structure porteuse (123) comportant les premiers moyens de verrouillage (129) et les premiers moyens de manœuvre (134, 144) ou les moyens d'ancrage (114).

2. Siège (100) selon la revendication 1, dans lequel le support (110) comporte :
- des seconds moyens de verrouillage adaptés à verrouiller le support (110) sur le plancher (12), et
- des seconds moyens de manœuvre (116) manœuvrables manuellement et adaptés à désactiver les seconds moyens de verrouillage pour libérer au moins une mobilité du support (110) par rapport au plancher (12).

3. Siège (100) selon la revendication 2, dans lequel, le plancher (12) intégrant des rails (13) parallèles, les seconds moyens de manœuvre (116) sont adaptés à libérer une mobilité de coulissement du support (110) dans lesdits rails (13).

4. Siège (100) selon l'une des revendications 1 à 3, dans lequel les moyens d'ancrage (114) comportent, en au moins trois points d'ancrage, une tringle sur laquelle les premiers moyens de verrouillage (129) peuvent être verrouillés.

5. Siège (100) selon l'une des revendications 1 à 4, dans lequel les premiers moyens de verrouillage (129) comportent, d'une part, une embase fixe (131, 141) qui définit une encoche (133, 143), et, d'autre part, un pêne (132, 142) qui est monté mobile par rapport à l'embase fixe (141) entre une position activée dans laquelle il est adapté à bloquer une tringle au fond de l'encoche (133, 143) et une position désactivée dans laquelle il libère la tringle.

6. Siège (100) selon l'une des revendications 1 à 5, dans lequel les premiers moyens de verrouillage (129) comportent deux gâches (140) et deux serrures (130) adaptés à être verrouillés respectivement sur quatre tronçons de tringle (114A).

7. Siège (100) selon l'une des revendications 1 à 6, dans lequel le fauteuil (120) est adapté à être monté sur le support (110) avec deux orientations distinctes.

8. Siège (100) selon l'une des revendications 1 à 7, dans lequel le support (110) comporte des moyens de fixation (119) adaptés à bloquer un équipement distinct du véhicule automobile (1), de préférence un équipement de loisir et/ou sportif tel qu'un vélo (200) ou une planche de surf.

9. Véhicule automobile (1) comportant un châssis (10) qui comprend un plancher (12), **caractérisé en ce qu'**il comporte au moins un siège (100) conforme à l'une des revendications 1 à 8, monté sur le plancher (12).
